# EUROPÄISCHE PATENTSCHRIFT

(11) **EP 0 777 947 B1**
(45) Veröffentlichungstag und Bekanntmachung des Hinweises auf die Patenterteilung: **13.08.2003**
(21) Anmeldenummer: 95928962.0
(22) Anmeldetag: 22.08.1995
(51) Int. Cl.: H04Q 1/14, H01R 13/40

(54) **KONTAKTBAUTEIL FÜR EINEN VERTEILER IN EINER TELEKOMMUNIKATIONSANLAGE**
CONTACT COMPONENT FOR A DISTRIBUTOR IN A TELECOMMUNICATIONS SYSTEM
COMPOSANT DE CONTACT POUR LE REPARTITEUR D'UN SYSTEME DE TELECOMMUNICATION

(30) Priorität: 30.08.1994 DE 4430794
(43) Veröffentlichungstag der Anmeldung: 11.06.1997
(73) Patentinhaber: CCS Technology, Inc., Wilmington, DE 19803 (US)
(72) Erfinder: KNAPP, Gotthard, D-82299 Türkenfeld (DE); SCHLEIHAUF, Manfred, D-67354 Römerberg (DE)
(74) Vertreter: Sturm, Christoph, Dipl.-Ing.
(86) Internationale Anmeldenummer: DE9501112
(87) Internationale Veröffentlichungsnummer: WO96007280

(56) Entgegenhaltungen:
- WO-A-91/14299
- DE-U- 9 213 947

## Beschreibung

Die Erfindung bezieht sich auf ein Kontaktbauteil für einen Verteiler in einer Telekommunikationsanlage, wobei das scheibenartig flache stapelbare Kontaktbauteil mit einem aus Isolierstoff bestehenden Gehäuse versehen ist, das Aufnahmen für zwei parallele Reihen von Kontaktteilen aufweist, die bedienungseitig als Anschlußelemente für ankommende bzw. abgehende elektrische Leitungen ausgebildet sind und die von der Bedienungseite aus in das Innere des Kontaktbauteils ragen und dort Kontaktfedern aufweisen, wobei jeweils ein Paar von Kontaktfedern aus beiden Reihen wechselweise über trennbare Kontaktstellen miteinander verbunden ist und wobei von zumindest einer Reihe der Kontaktteile zusätzliche Kontaktstücke in die Richtung der der Bedienungseite gegenüberliegenden Rückseite abgezweigt sind und an ihren freien Enden Steckkontakte für von der Rückseite her aufsteckbare Steckverbinder bilden.

Eine derartige Anordnung ist z.B. durch die DE-C-26 43 186 bekannt geworden. Der Steckverbinder befindet sich außerhalb des Kontaktbauteils auf dessen Rückseite. Die Steckkontakte des Kontaktbauteils sind als Federkontakte ausgebildet, an die entweder Schutzstecker oder Kabelstecker z.B. eines zu Vermittlungseinrichtungen führenden Systemkabels angeschlossen werden können.

Der Erfindung liegt die Aufgabe zugrunde, ein Kontaktbauteil zu schaffen, das kostengünstig hergestellt werden kann und kompakt ausgebildet ist und das es ermöglicht, zusätzlich zu den Kabelsteckern Schutzstecker anzuschließen.

Diese Aufgabe wird durch die Erfindung gemäß Anspruch 1 gelöst. Der als Stiftkontakt ausgebildete Steckkontakt ist erheblich einfacher und kostengünstiger herzustellen und zu montieren als ein Federkontakt. Die aufwendigeren Federkontakte sind dem Steckverbinder zugeordnet. Dadurch ist es möglich, für alle Anwendungen ein einheitliches Kontaktbauteil zu verwenden, selbst dann, wenn keine Kabelstecker vorgesehen sind.

Die Mehrkosten für die Federkontakte fallen somit nur bei den tatsachlich aufgesteckten Steckverbindern an. Für die Steckverbinder können z.B. handelsübliche Steckerteile verwendet werden, die in großen Stückzahlen auch für andere Verbindungszwecke hergestellt werden. Derartige Steckverbinder sind derart miniaturisiert, daß sie erheblich schmaler gehalten werden können als das Kontaktbauteil. Dadurch ist es möglich, den Steckverbinder in das Kontaktbauteil derart einzusetzen, daß das Kontaktbauteil über die Rückseite des Steckverbinders hinaus verlängerbar ist. Der als Kabelstecker ausgebildete Steckverbinder kann z.B. von der Schmalseite durch eine durchgehende Öffnung im Gehäuse des Kontaktbauteils quer zur Steckrichtung eingesteckt und sodann in der Steckrichtung auf die Steckkontakte aufgeschoben werden, wobei Führungsformen im Gehäuse eine genaue Lagezuordnung ermöglichen. Selbst bei eingestecktem Kabelstecker können zusätzliche Kontaktstreifen an diesem vorbei zur Rückseite des Kontaktbauteils geführt werden, um an diese wie bisher Schutzstecker anschließen zu können.

Vorteilhafte Weiterbildungen der Erfindung sind in den Ansprüchen 2 bis 7 gekennzeichnet:

Durch die Weiterbildung nach Anspruch 2 kann das Kontaktteil auf seiner vollen Länge am Gehäuse abgestützt werden. Damit werden die Federkräfte der Kontaktfeder im Bereich der Kontaktstellen abgefangen und gleichmäßiger auf das Gehäuse verteilt. Die größer Anlagelänge der Kontaktteile ergibt eine genauere Einbaulage im Bereich der Kontaktfeder. Diese kann nun bereits bei der Herstellung in Bezug auf den Rahmenabschnitt definiert ausgewogen werden. Die Federkraft hängt somit lediglich vom Biegewinkel zwischen der Kontaktfeder und dem Rahmenabschnitt ab, nicht aber von anderen Abschnitten des Kontaktteils.

Der geschlossene Rahmenabschnitt mit dem Quersteg zwischen den beiden seitlichen Stegen macht es nach Anspruch 3 möglich, das Kontaktstück mit dem Stiftkontakt einstückig an das Kontaktteil anzusetzen, was mit sehr geringem Aufwand verbunden ist. Durch die Anordnung des Stiftkontakts in der Mittelebene des Gehäuses kann der anzusetzende Steckverbinder zentral in das Gehäuse eingesetzt werden.

Durch die Weiterbildung durch Anspruch 4 ist es möglich, sowohl für Kontaktbauteile mit als auch ohne eine Anschlußmöglichkeit für Schutzstecker stets das gleiche Gehäuse zu verwenden. Das zusätzliche Gehäuseteil und die Zusatzfedern werden nur in den Fällen benötigt, in denen Schutzstecker angeschlossen werden.

Durch die Weiterbildung durch Anspruch 5 ist es möglich, das zusätzliche Gehäuseteil in einem einfachen Montagevorgang mit dem Gehause zu verbinden. Die Anordnung der Rasthaken und Zentrierzapfen am zusätzlichen Gehäuseteil vereinfacht die Herstellung des häufiger benötigten Gehauses 1, das zudem von den vorstehenden bruchgefährdeten Elementen freibleibt.

Durch die Weiterbildungen nach den Ansprüchen 6 und 7 ist es möglich, die Zusatzfeder durch einen einfachen Einsteckvorgang mit dem Kontaktteil unter relativ großer Andruckkraft zu kontaktieren. Durch die Auflagestege für den Rahmenabschnitt ist sichergestellt, daß die Federwirkungen der Kontaktfeder und der Zusatzfeder entkoppelt sind. Bei bereits gelieferten Kontaktbauteilen, die keine Anschlußmöglichkeit für Schutzstecker aufweisen, ist es im Bedarfsfalle möglich, die Zusatzfedern und die zusätzlichen Gehäuseteile in einfacher Weise nachzurüsten.

Im folgenden wird die Erfindung anhand von in der Zeichnung dargestellten Ausführungsbeispielen näher erläutert. Es zeigen:
- Figur 1: einen Längsschnitt durch ein stapelbares Kontaktbauteil für einen Verteiler einer Telekommunikationsanlage,
- Figur 2: eine Draufsicht auf das Kontaktbauteil nach Figur 1,
- Figur 3: bis 7 schematisierte Längsschnitte durch unterschiedliche Varianten des Kontaktbauteils nach Figur 1.

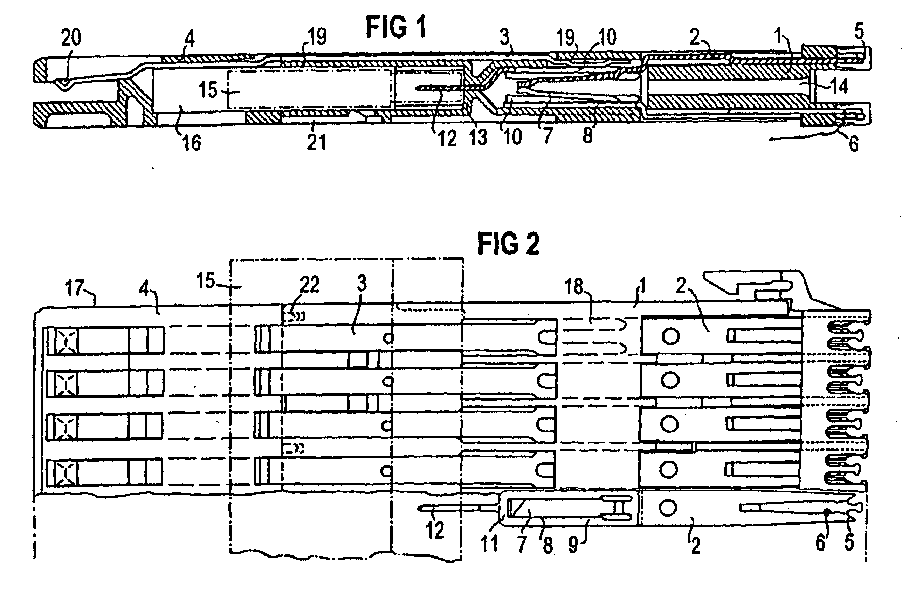

Nach den Figuren 1 und 2 besteht ein scheibenartig flaches stapelbares Kontaktbauteil aus einem Gehäuse 1, Kontaktteilen 2, Zusatzfedern 3 und einem zusätzlichem Gehäuseteil 4. Die Kontaktteile 2 sind in zwei übereinanderliegenden parallelen Reihen in Aufnahmen des Gehäuses 1 angeordnet und bilden auf der Bedienungsseite als Schneidklemmen ausgebildete Anschlußelemente 5 für ankommende und/oder abgehende elektrische Leitungen 6. Von dort sind die Kontaktteile 2 geradlinig in die Richtung der der Bedienungsseite gegenüberliegenden Rückseite des Kontaktbauteils in das Innere des Gehäuses eingeführt und bilden dort Kontaktfedern 7. Diese liegen mit ihren freien Enden paarweise aneinander und bilden einen Trennkontakt, der durch einen nicht dargestellten Trennstecker trennbar ist, der von der Bedienungsseite her durch eine Stecköffnung 14 im Gehäuse 1 zwischen die beiden Kontaktfedern 7 einsteckbar ist.

Die Kontaktfeder 7 ist als fingerartiger Lappen aus einem Rahmenabschnitt 8 des Kontaktteils 1 freigeschnitten und ausgebogen. Stehengebliebene seitliche Stege 9 des Rahmenabschnitts 8 stützen sich auf ihrer dem Trennkontakt abgewandten Außenseite am Gehäuse 1 ab und liegen mit ihrer Innenseite auf seitlichen Auflagestegen 10 des Gehäuses 1 auf. Der freie Abstand zwischen den Auflagestegen 10 ist größer als die Breite der Kontaktfeder 7, so daß diese frei hindurchtreten kann.

Am der Bedienungsseite abgewandten Ende, sind die Stege 9 des Rahmenabschnitts 8 durch einen Quersteg 11 verbunden, an den einstückig ein zur Rückseite des Kontaktbauteils ragendes Kontaktstück 12 angesetzt ist. Dieses ist an seinem freien Ende als Stiftkontakt ausgebildet, der durch eine Öffnung in einer Zwischenwand 13 des Gehäuses 1 hindurchgesteckt und darin geführt ist. Das Kontaktstück 12 ist in einer Doppelbiegung aus der Ebene des Rahmenabschnitts 8 in die Mittelebene des Gehäuses 1 geführt. Auf die Stiftkontakte sind entsprechende Federkontakte eines strichpunktiert angedeuteten flachen Kabelsteckers 15 aufsteckbar, der in einem Hohlraum 16 des Gehäuses 1 aufgenommen und geführt ist. Der Hohlraum 16 ist so ausgebildet, daß der Kabelstecker 15 von der schmalen Außenseite 17 des Gehäuses 1 her durch den Hohlraum 16 hindurchgesteckt werden kann, wobei die schmale Außenseite 17 zwischen der Bedienungsseite und der Rückseite des Gehäuses 1 verlauft. Der der auf beiden Außenseite herausragende Kabelstecker 15 kann sodann zur Bedienungsseite hin auf die Kontaktstücke 12 aufgesteckt werden.

Die Zusatzfeder 3 ist im Bereich des Rahmenabschnitts 8 an das Kontaktteil 2 unter Vorspannung angedrückt und mit diesem lösbar kontaktiert. Die Federwirkung ist durch eine flache bogenförmige Ausbiegung an der Zusatzfeder 3 gegeben. Diese ist im Kontaktierbereich durch einen Längsschlitz gabelartig in zwei Schenkel 18 geteilt, wodurch die beiden Schenkel 18 hinsichtlich ihrer Federwirkung entkoppelt sind und einen Doppelkontakt bilden. Die Zusatzfeder 3 ist entlang einer oberen Gehäusewand 19 zur Rückseite des Gehäuses 1 geführt und bildet dort einen Federkontakt 20 für einen rückseitig ansetzbaren Schutzstecker.

Zwischen den Kontaktstücken 12 und den Federkontakten 20 ist das Gehäuse parallel zur Bedienungsseite 2 geteilt. Das rückseitige Gehäuseteil 4 ist mittels wechselseitig angeordneter Rasthaken 21 und Rastschultern sowie Zentrierzapfen 22 und Zentrierlöchern am vorderen Gehäuseteil lösbar befestigt. Die Trennfuge zwischen den Gehäuseteilen liegt etwa in der Mitte des Hohlraums 16. Für den Fall, daß keine Schutzstecker benötigt werden, kann das Kontaktbauteil ohne das rückseitige Gehauseteil 4 und die Zusatzfeder 3 geliefert werden. Der Hohlraum 16 ist dann nach hinten offen und der Kabelstecker 15 ragt rückseitig aus dem Kontaktbauteil heraus, wodurch eine bessere Zugänglichkeit zum Kabelstecker gegeben ist.

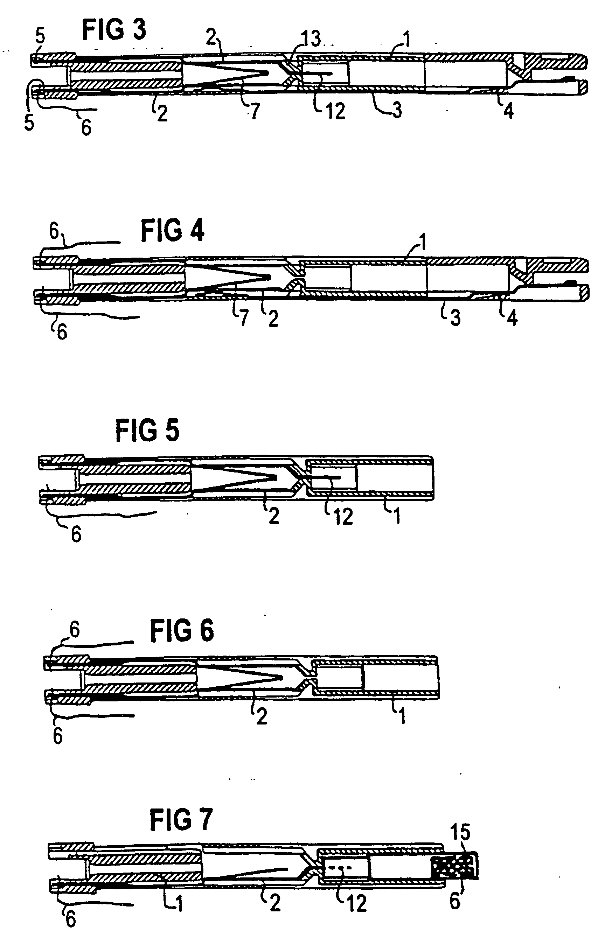

In den Figuren 3 bis 7 sind verschiedene Varianten des Kontaktbauteils, die aus gleichen Grundelementen kombiniert sind.

Das Kontaktbauteil aus Figur 3 entspricht in allen Elementen dem Kontaktbauteil nach Figur 1. Dabei sind z.B. die ankommenden der elektrischen Leitung 6 an die Anschlußelemente 5 der unteren Reihe von Kontaktteilen 2 angeschlossen. Das Kontaktstück 12 ist an die Kontaktteile 2 der oberen Reihe angesetzt. Die abgehenden Leitungen sind dem nicht dargestellten Kabelstecker zugeordnet, der auf die Kontaktstücke 12 aufsteckbar ist. Die Kontaktfedern 7 der oberen und unteren Reihe bilden jeweils paarweise den Trennkontakt, der durch Dazwischenschieben eines Trennsteckers von der Bedienungsseite her getrennt werden kann, wodurch die Leitungsführung unterbrochen wird. Mittels der Zusatzfeder 3 und dem zusätzlichen Gehäuseteil 4 kann rückseitig der Schutzstecker angesetzt werden.

Nach Figur 4 ist das Kontaktstück 12 weggelassen. Die ankommenden und abgehenden Leitungen sind an die oberen und unteren Reihen der Anschlußelemente 5 angeschlossen und über den Trennkontakt der Kontaktfedern 7 miteinander verbunden. Ein Kabelstecker wird in diesem Falle nicht benötigt. Die Zusatzfeder 3 und das zusätzliche Gehäuseteil 4 ermöglichen das Anstecken des Schutzsteckers auf der Rückseite des Kontaktbauteils.

Nach Figur 5 sind das zusätzliche Gehäuseteil 4 und die Zusatzfeder 3 weggelassen, wodurch kein Schutzstecker angeschlossen werden kann. Im übrigen gleicht die Anordnung der nach Figur 3.

Figur 6 entspricht dem Kontaktbauteil nach Figur 4 ohne die Zusatzfeder 3 und das zusätzliche Gehäuseteil 4.

Nach Figur 7 sind die Kontaktteile in der oberen Reihe weggelassen. Die Kontaktteile der unteren Reihe sind mit den Kontaktstücken 12 versehen, auf die der Kabelstecker 15 mit den ankommenden Leitungen 6 aufgesteckt ist. Die ankommenden und abgehenden Leitungen 6 sind hier nicht trennbar.

## Patentansprüche

1. Kontaktbauteil für einen Verteiler in einer Telekommunikationsanlage, wobei das scheibenartig flache stapelbare Kontaktbauteil mit einem aus Isolierstoff bestehenden Gehäuse versehen ist, das Aufnahmen für zwei parallele Reihen von Kontaktteilen (2) aufweist, die bedienungsseitig als Anschlußelemente (5) für ankommende und/oder abgehende elektrische Leitungen (6) ausgebildet sind und die von der Bedienungseite aus in das Innere des Kontaktbauteils ragen und dort Kontaktfedern (7) aufweisen, wobei jeweils ein Paar von den Kontaktfedern (7) aus beiden Reihen wechselweise über trennbare Kontaktstellen miteinander verbunden sind und wobei von einer Reihe der Kontaktteile zusätzliche Kontaktstücke in die Richtung der der Bedienungsseite gegenüberliegenden Rückseite abgezweigt sind und an ihrem freien Ende Steckkontakte (z.B. 12) für von der Rückseite her aufsteckbare Steckverbinder (z.B. 15) bilden,
**dadurch gekennzeichnet,**
**daß** das Kontaktbauteil zwischen den trennbaren Kontaktstellen und den Steckkontakten (12) jeweils eine Zwischenwand (13) aufweist, die mit einer Öffnung zum Durchstecken und Durchführen des als Stiftkontakt ausgebildeten Kontaktstücks (12) versehen ist und daß das Gehäuse (1) mit Führungsformen für den Kabelstecker versehen ist.

2. Kontaktbauteil nach Anspruch 1,
**dadurch gekennzeichnet,**
**daß** die Kontaktfeder (7) als fingerartiger Lappen ausgebildet ist, der aus einem inneren Endabschnitt des Kontaktteils (2) freigeschnitten und herausgebogen ist, daß seitlich der Kontaktfedern (7) stehengebliebene Stege (9) mit einem am inneren Ende des Kontaktteils (2) angeordneten Quersteg (11) einen geschlossenen Rahmenabschnitt (8) bilden, der sich auf der der Kontaktstelle der Kontaktfeder (7) abgewandten Seite am Gehäuse (1) abstützt.

3. Kontaktbauteil nach Anspruch 2,
**dadurch gekennzeichnet,**
**daß** das Kontaktstück (12) einstückig mit dem Kontaktteil (2) verbunden ist und am Quersteg (11) des Rahmens (8) angesetzt ist,
**daß** das Kontaktstück (12) vom Quersteg (11) aus in einer Doppelbiegung in die Mittelebene des Gehäuses (1) gebogen ist.

4. Kontaktbauteil nach Anspruch 1, 2, oder 3,
**dadurch gekennzeichnet,**
**daß** an das Gehäuse (1) rückseitig ein zusätzliches Gehäuseteil (4) ansetzbar ist, das Aufnahmen für Zusatzfedern (3) aufweist, die mit dem Kontaktteil 2 kontaktierbar sind und die rückseitig Steckkontaktstellen (20) für zusätzlich zu den Kabelsteckern ansetzbaren Schutzstecker aufweisen.

5. Kontaktbauteil nach Anspruch 4,
**dadurch gekennzeichnet,**
**daß** das Gehäuse (1) und das zusätzliche Gehäuseteil (4) mittels wechselseitig angeordneter Rasthaken (21) und Rastschultern sowie Zentrierzapfen (22) und Zentrierlöchern verbunden sind, und
**daß** die fingerartigen Rasthaken (21) und die Zentrierzapfen (22) am zusätzlichen Gehäuseteil angebracht sind.

6. Kontaktbauteil nach einem der vorhergehenden Ansprüche,
**dadurch gekennzeichnet,**
**daß** die Zusatzfeder (3) am Rahmenabschnitt (8) des Kontaktteils (2) lösbar anliegt und in ihrem Kontaktierbereich zum Kontaktteil (2) unter Vorspannung federnd auslenkbar ausgebildet und gelagert ist und in einem Zwischenraum zwischen dem Rahmenabschnitt (8) und einer äußeren Gehäusewand (19) einsteckbar ist.

7. Kontaktbauteil nach Anspruch 6,
**dadurch gekennzeichnet,**
**daß** auf der der Zusatzfeder abgewandten Seite des Rahmenabschnitts (8) am Gehäuse (1) seitlich der Kontaktfeder (7) Auflagestege (10) für den Rahmenabschnitt (8) des Kontaktteils angeordnet sind und daß die Zusatzfeder (4) in ihrem Kontaktierbereich durch einen Längsschlitz gabelartig in zwei Schenkel (18) geteilt ist, die auf den seitlichen Stegen (9) des Rahmenabschnitts (8) aufliegen.

## Claims

1. Contact component for a distributor in a telecommunication system, the stackable contact component which is flat in the manner of a plate being provided with a housing which consists of insulating material and has receptacles for two parallel rows of contact parts (2) which are constructed on the user side as connection elements (5) for incoming and/or outgoing electrical lines (6) and which project from the user side into the interior of the contact component and have contact springs (7) there, in each case a pair of the contact springs (7) from the two rows being alternately connected to one another by means of isolatable contact points, and additional contact elements being branched off, from one row of contact parts, in the direction of the rear side lying opposite the user side and forming at their free end plug-type contacts (for example 12) for multipole connectors (for example 15) which can be plugged on from the rear side, **characterized in that** the contact component has in each case an intermediate wall (13) between the isolatable contact points and the plug-type contacts (12), which intermediate wall (13) is provided with an opening for plugging through and guiding through the contact element (12) which is constructed as a pin contact, and **in that** the housing (1) is provided with guide shapes for the cable plug.

2. Contact component according to Claim 1, **characterized in that** the contact spring (7) is constructed as a finger-like tab which is cut out and bent out from an inner end section of the contact part (2), **in that**, to the side of the contact springs (7), webs (9) which have remained in position form, with a transverse web (11) arranged at the inner end of the contact part (2), a continuous frame section (8) which is supported on the housing (1) on the side remote from the contact point of the contact spring (7).

3. Contact component according to Claim 2, **characterized in that** the contact element (12) is integrally connected to the contact part (2) and is joined onto the transverse web (11) of the frame (8), and **in that** the contact element (12) is bent, in a double bend, out of the transverse web (11) into the central plane of the housing (1).

4. Contact component according to Claim 1, 2 or 3, **characterized in that** an additional housing part (4) can be joined onto the housing (1) at the rear side, which housing part (4) has receptacles for additional springs (3) which can be brought into contact with the contact part (2) and which have plug-type contact points (20), at the rear, for protective plugs which can be joined on in addition to the cable plugs.

5. Contact component according to Claim 4, **characterized in that** the housing (1) and the additional housing part (4) are connected by means of locking hooks (21) and locking shoulders as well as centring pins (22) and centring holes which are arranged alternately, and **in that** the finger-like locking hooks (21) and the centring pins (22) are attached to the additional housing part.

6. Contact component according to one of the preceding claims, **characterized in that** the additional spring (3) bears releasably against the frame section (8) of the contact part (2) and is constructed and supported in its area in which it makes contact with the contact part (2) so as to be capable of deflecting in a sprung manner with pretensioning and can be plugged in in an intermediate space between the frame section (8) and an outer housing wall (19).

7. Contact component according to Claim 6, **characterized in that** support webs (10) for the frame section (8) of the contact part are arranged on the housing (1), to the side of the contact spring (7), on that side of the frame section (8) which is remote from the additional spring, and **in that** the additional spring (3) is divided in its contacting area into two legs (18) in a fork-like manner by means of a longitudinal slot, which legs (18) rest on the lateral webs (9) of the frame section (8).

## Revendications

1. Composant de contact pour le répartiteur d'un système de télécommunication, le composant de contact sous forme de disque plat empilable étant pourvu d'un boîtier constitué en matériau isolant, qui présente les accueils pour deux rangées parallèles de pièces de contact (2), qui du côté de l'utilisateur sont formées en éléments de raccordement (5) pour des liaisons électriques (6) qui arrivent et/ou qui partent et qui pénètrent à partir du côté de l'utilisateur vers l'intérieur du composant de contact et qui y présentent des ressorts de contact (7), une paire de ressorts de contact (7) des deux rangées étant respectivement reliée alternativement à travers des points de contact séparables et des parties de contact supplémentaires étant dérivées à partir d'une des rangées des pièces de contact dans la direction du côté arrière opposée au côté utilisateur et qui forment à leur extrémité libre, des contacts à fiche (par exemple 12) pour des liaisons à fiche (par exemple 15) à partir du côté arrière, **caractérisé en ce que** le composant de contact présente respectivement entre les points de contact séparables et les contacts à fiche (12), une paroi intermédiaire (13) qui est pourvue d'une ouverture pour le passage du contact à fiche (12) en forme de broche de contact et **en ce que** le boîtier (1) est pourvu de formes de guidage pour la fiche du câble.

2. Composant de contact selon la revendication 1, **caractérisé en ce que** le ressort de contact (7) est réalisé comme languette en forme de doigt qui est découpée et pliée à partir de l'intérieur d'une découpe d'extrémité de la pièce de contact (2), **en ce que** les traverses restantes (9) sur le côté des ressorts de contact (7), forment avec une traverse transversale (11) disposée à l'intérieur de l'extrémité de la pièce de contact (2), un cadre de découpe fermé (8) qui s'appuie sur le boîtier (1) du côté qui s'écarte du point de contact du ressort de contact (7).

3. Composant de contact selon la revendication 2, **caractérisé en ce que** la partie de contact (12) est reliée unitairement à la pièce de contact (2) et est fixée à la traverse transversale (11) du cadre (8), **en ce que** la partie de contact (12) est repliée dans le plan médian du boîtier (1) sous forme d'un double pliage à partir de la traverse transversale (11).

4. Composant de contact selon la revendication 1, 2, ou 3, **caractérisé en ce que**, sur le côté arrière du boîtier (1), on peut adjoindre une partie de boîtier supplémentaire (4) qui présente des accueils pour des ressorts supplémentaires (3) qui peuvent être mis en contact avec la partie de contact 2 et qui, sur leur côté arrière, présentent des emplacements de contact (20) pour des fiches de protection pouvant être ajoutées en plus des fiches du câble.

5. Composant de contact selon la revendication 4, **caractérisé en ce que** le boîtier (1) et la partie de boîtier supplémentaire (4) sont reliés au moyen de crochets encliquetables (21) et d'épaulements encliquetables ainsi que de douilles de centrage (22) et de trous de centrage disposés alternativement des deux côtés, et **en ce que** les crochets encliquetables (21) en forme de doigt et les douilles de centrage (22) sont disposés sur la partie de boîtier supplémentaire.

6. Composant de contact selon une des revendications précédentes, **caractérisé en ce que** le ressort supplémentaire (3) est placé de manière amovible à la découpe du cadre (8) de la pièce de contact (2) et, dans son périmètre de contact, est rendu orientable sous la tension du ressort par rapport à la pièce de contact (2) et qu'il peut être enfiché dans un espace entre la découpe du cadre (8) et une paroi extérieure du boîtier (19).

7. Composant de contact selon la revendication 6, **caractérisé en ce que** des traverses d'appui (10) pour la découpe du cadre (8) de la partie de contact sont disposées sur le boîtier (1) sur le côté du ressort de contact (7), sur le côté de la découpe du cadre (8) s'écartant du ressort supplémentaire et **en ce que** dans son périmètre de contact, le ressort supplémentaire (4) est partagé par une fente longitudinale en fourche, en deux joues (18) qui reposent sur les traverses latérales (9) de la découpe du cadre (8).
